# EUROPEAN PATENT APPLICATION

(11) **EP 3 524 903 A1**
(43) Date of publication of application: **14.08.2019**
(21) Application number: 17887068.9
(22) Date of filing: 25.12.2017
(51) Int. Cl.: F25B 1/00, F25B 43/00

(54) **REFRIGERANT CIRCUIT SYSTEM AND OIL EQUALIZATION CONTROL METHOD**

(30) Priority: 28.12.2016 JP 2016256131
(71) Applicant: Mitsubishi Heavy Industries Thermal Systems, Ltd., Tokyo 108-8215 (JP)
(72) Inventor: KATO Takahiro, Tokyo 108-8215 (JP); YASUDA Tatsuhiro, Tokyo 108-8215 (JP); TAKIGAWA Masayuki, Tokyo 108-8215 (JP)
(74) Representative: Henkel, Breuer & Partner
(86) International application number: PCT/JP2017/046335
(87) International publication number: WO 2018/123927

(57) **Abstract**

A refrigerant circuit system includes a refrigerant circuit provided with a plurality of compressors, a heat exchanger, a four-way valve, an expansion valve, and a plurality of pipes for connecting said elements and circulating a refrigerant, as well as a control device for controlling the refrigerant circuit. The plurality of compressors are connected in parallel. Each of the plurality of pipes is connected to the intake side of one of the plurality of compressors, the plurality of pipes having different pressure losses from each other. The control device controls, in oil equalization control, the rotational speed of the compressor, in its turn, connected to the pipe in a sequence set in advance in accordance with the pressure losses of the pipes.

## Description

### Technical Field

The present invention relates to a refrigerant circuit system and an oil equalization control method.

This application claims priority based on JP 2016-256131 filed in Japan on December 28, 2016, of which the contents are incorporated herein by reference.

### Background Art

In an air conditioner including a plurality of compressors in one outdoor unit, or in an air conditioning system including a plurality of outdoor units, a configuration in which low-pressure portions of the compressors are connected with each other by using piping (oil equalization pipe) may be employed to prevent an imbalance in refrigeration oil between the compressors. Furthermore, oil equalization control may be performed to correct an imbalance in the amount of refrigeration oil between the compressors. In typical oil equalization control, for example, the rotational speed of one of a plurality of compressors that normally operate at the same rotational speed is increased to make a pressure differential between the one compressor and the other compressor and thus to move refrigeration oil from a compressor having higher pressure to a compressor having lower pressure through an oil equalization pipe.

Note that, as a related technology, Patent Document 1 discloses a technology in which a liquid level sensor or the like detects the position of the liquid surface of refrigeration oil in each of compressors, and the rotational speeds of the compressors are controlled so that the difference between the positions of the liquid surfaces is decreased, thereby eliminating unevenness of the refrigeration oil.

### Citation List

### Patent Documents

Patent Document 1: JP 2005-241070 A

### Summary of Invention

### Problem to be Solved by the Invention

In the above-described typical oil equalization control, a sequence for the compressors is often preliminarily determined, and control of increasing the rotational speeds is performed, following this sequence. In consideration of the original purpose of oil equalization control, it is desirable to restore refrigeration oil in the order from a compressor having a smaller amount of refrigeration oil. In this case, it is required to increase the rotational speed of a compressor of which the refrigeration oil is desired to be restored, to decrease pressure of this compressor and thus to take in refrigeration oil from another compressor having relatively high pressure. Unfortunately, in the above-described typical oil equalization control, without considering the amounts of refrigeration oil in individual compressors, the rotational speeds are increased in the predetermined sequence. Thus, in a case where the first compressor in the sequence stores a large amount of refrigeration oil from the beginning, for example, the amount of refrigeration oil in that compressor is further increased, which may result in an even greater imbalance.

The present invention provides a refrigerant circuit system and an oil equalization control method that can solve the above-described problem.

### Solution to Problem

According to a first aspect of the present invention, a refrigerant circuit system includes: a refrigerant circuit including a plurality of compressors, a heat exchanger, a four-way valve, an expansion valve, and a plurality of pipes connecting the compressors, the heat exchanger, the four-way valve, and the expansion valve, a refrigerant circulating through the refrigerant circuit; and a control device configured to control the refrigerant circuit; the plurality of compressors being connected in parallel; each of the plurality of pipes being connected to an intake side of one of the plurality of compressors, and the plurality of pipes having mutually different pressure losses; and the control device controlling a rotational speed of the compressor, in its turn, connected with the pipe in a sequence set in advance in accordance with the pressure losses of the pipes, in oil equalization control.

According to a second aspect of the present invention, the control device performs such control that the compressor connected with the pipe having a smaller pressure loss has a relatively low pressure in order from the compressor among the plurality of compressors in the oil equalization control.

According to a third aspect of the present invention, the control device increases the rotational speed of the compressor connected with the pipe having a smaller pressure loss in order from the compressor among the plurality of compressors in the oil equalization control.

According to a fourth aspect of the present invention, the plurality of pipes are pipes each connecting an accumulator with one of the plurality of compressors, the accumulator being disposed on the intake sides of the compressors in the refrigerant circuit system.

According to a fifth aspect of the present invention, the pipes connected to the intake sides of the plurality of compressors have mutually different lengths; and the control device increases the rotational speed of the compressor connected with the pipe having a shorter length in order from the compressor in the oil equalization control.

According to a sixth aspect of the present invention, the pipes connected to the intake sides of the plurality of compressors have mutually different pipe diameters; and the control device increases the rotational speed of the compressor connected with the pipe having a larger pipe diameter in order from the compressor in the oil equalization control.

According to a seventh aspect of the present invention, an oil equalization control method includes: in a refrigerant circuit including a plurality of compressors, a heat exchanger, a four-way valve, an expansion valve, and a plurality of pipes connecting the compressors, the heat exchanger, the four-way valve, and the expansion valve, a refrigerant circulating through the refrigerant circuit, the plurality of compressors being connected in parallel, each of the plurality of pipes being connected to an intake side of one of the plurality of compressors, and the plurality of pipes having mutually different pressure losses, controlling a rotational speed of the compressor, in its turn, connected with the pipe in a sequence set in advance in accordance with the pressure losses of the pipes.

### Advantageous Effect of Invention

The above-described refrigerant circuit system and oil equalization control method can correct an imbalance in the refrigeration oil between the plural compressors and improve reliability of the system.

### Brief Description of Drawings

FIG. 1 is a first schematic diagram illustrating an example of a refrigerant circuit system according to an embodiment of the present invention.
FIG. 2 is a first explanatory diagram illustrating a control sequence for compressors according to the embodiment of the present invention.
FIG. 3 is a second explanatory diagram illustrating a control sequence for compressors according to the embodiment of the present invention.
FIGS. 4A and 4B are explanatory diagrams illustrating an example of rotational speed control of compressors according to the embodiment of the present invention.
FIG. 5 is a flowchart illustrating an example of oil equalization control according to the embodiment of the present invention.
FIG. 6 is a second schematic diagram illustrating an example of the refrigerant circuit system according to the embodiment of the present invention.

### Description of Embodiments

### Embodiment

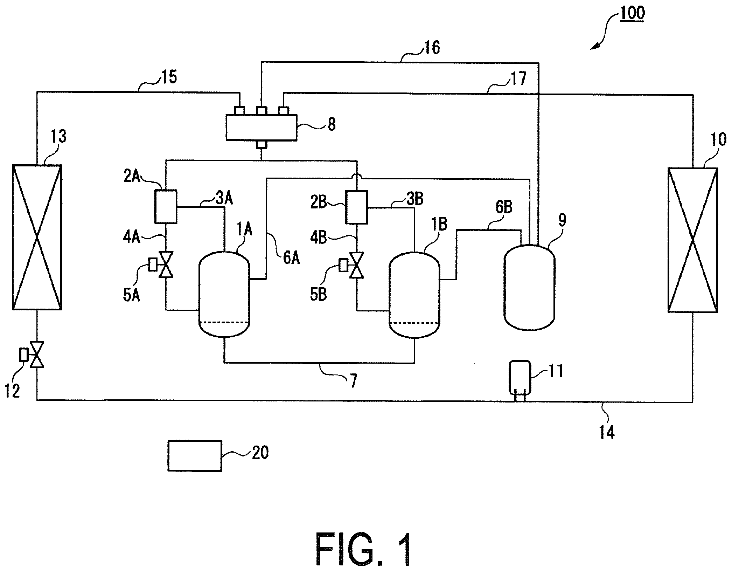

A refrigerant circuit system according to an embodiment of the present invention will be described below with reference to FIG. 1 to FIG. 6.

FIG. 1 is a first schematic diagram illustrating an example of the refrigerant circuit system according to the embodiment of the present invention.

The refrigerant circuit system 100 is, for example, a refrigerant circuit system used in an air conditioner. As illustrated in FIG. 1, the refrigerant circuit system 100 includes compressors 1A and 1B, oil separators 2A and 2B, emission pipes 3A and 3B, oil return pipes 4A and 4B, solenoid valves 5A and 5B, intake pipes 6A and 6B, an oil equalization pipe 7, a four-way valve 8, an accumulator 9, an outdoor heat exchanger 10, a receiver 11, an expansion valve 12, an indoor heat exchanger 13, a liquid pipe 14, gas pipes 15, 16, and 17, and a control device 20. FIG. 1 schematically illustrates a basic configuration of the refrigerant circuit system 100, and another constituent element may further be included.

The compressors 1A and 1B compress a refrigerant and supply the compressed high-pressure refrigerant to a refrigerant circuit. The compressor 1A and 1B are connected in parallel, and are controlled so as to operate with the same displacement in normal operation. When the compressors 1A and 1B are of the same model, for example, the compressors 1A and 1B operate at the same rotational speed.

The oil separators 2A and 2B are disposed on the emission sides of the compressors 1A and 1B, respectively, and are devices separating refrigeration oil from the refrigerant that is fed through the emission pipes 3A and 3B and is mixed with the refrigeration oil. The oil separators 2A and 2B each have, for example, a cylindrical shape of which the top side and bottom side are closed, and store the separated refrigeration oil.

The oil return pipes 4A and 4B each have one end connected with a lower portion of the vessel of the corresponding one of the oil separators 2A and 2B. The oil return pipes 4A and 4B each have the other end connected with the corresponding one of the compressors 1A and 1B. The oil return pipe 4A is provided with the solenoid valve 5A. The degree of opening of the solenoid valve 5A is adjusted to enable adjustment of the amount of the refrigeration oil returning from the oil separator 2A to the compressor 1A. Similarly, the oil return pipe 4B is provided with the solenoid valve 5B. The degree of opening of the solenoid valve 5B is adjusted to enable adjustment of the amount of the refrigeration oil returning from the oil separator 2B to the compressor 1B.

The oil equalization pipe 7 allows communication between the compressors 1A and 1B and equalizes the refrigeration oil stored in the two compressors.

The four-way valve 8 switches the flow direction of the refrigerant between a direction in heating operation and a direction in cooling operation. For example, in heating operation, the high-pressure refrigerant emitted by the compressors 1A and 1B is guided to the gas pipe 15 by using the four-way valve 8, and the indoor heat exchanger 13 (condenser) radiates heat of the refrigerant to the interior of the room. The refrigerant liquefied by passing through the indoor heat exchanger 13 is decreased in pressure by the expansion valve 12, passes through the liquid pipe 14, and is supplied to the outdoor heat exchanger 10 (evaporator). The receiver 11 disposed on the liquid pipe 14 stores the liquid refrigerant that has been liquefied. The refrigerant gasified by the outdoor heat exchanger 10 passes through the gas pipe 17, reaches the four-way valve 8, and is supplied through the gas pipe 16 to the accumulator 9. The accumulator 9 is a pressure vessel disposed upstream from the compressors 1A and 1B. The accumulator 9 performs vapor-liquid separation on the refrigerant supplied to the compressors 1A and 1B. The refrigerant gas separated by the accumulator 9 passes through the intake pipes 6A and 6B and is taken into the compressors 1A and 1B. The intake pipes 6A and 6B of the present embodiment are provided, having mutually different pressure losses. For example, the intake pipe 6A may be longer than the intake pipe 6B so that the intake pipe 6A has a greater pressure loss. Alternatively, the intake pipe 6A may have a pipe diameter smaller than that of the intake pipe 6B so that the intake pipe 6A has a greater pressure loss.

In cooling operation, the refrigerant circulates in the direction opposite to the direction in heating operation. That is, the high-pressure refrigerant emitted by the compressors 1A and 1B is guided to the gas pipe 17 by using the four-way valve 8, and is supplied to the outdoor heat exchanger 10 (condenser), the liquid pipe 14, the expansion valve 12, and the indoor heat exchanger 13 (evaporator). The refrigerant of which the heat is exchanged for indoor air by the indoor heat exchanger 13 passes through the gas pipe 15, is guided to the gas pipe 16 by using the four-way valve 8, and is taken into the compressors 1A and 1B through the accumulator 9.

The refrigerant emitted by the compressors 1A and 1B contains the refrigeration oil. A major portion of the refrigeration oil emitted by the compressors 1A and 1B is captured by the oil separators 2A and 2B and returns to the compressors 1A and 1B via the oil return pipes 4A and 4B. The remaining portion of the refrigeration oil circulates through the refrigeration cycle formed as described above and is introduced into the accumulator 9. One portion of the refrigeration oil introduced into the accumulator 9 returns to the compressors 1A and 1B together with the gasified refrigerant, and the other portion is stored in the accumulator 9.

A deficiency of the amount of the refrigeration oil collected into the compressors 1A and 1B causes a fault such as seizure of the compressors 1A and 1B. Thus, the control device 20 performs, for example, oil return control to enable an appropriate amount of the refrigeration oil to be collected at intervals of certain operating time. There are various ways of oil return control, and in the refrigerant circuit system 100, control of collecting the refrigeration oil into the accumulator 9 is performed, for example. Thereafter, the control device 20 performs control of returning the refrigeration oil collected into the accumulator 9 to the compressors 1A and 1B little by little over time. At this time, the control device 20 performs oil equalization control to prevent an imbalance in the refrigeration oil stored in the compressors 1A and 1B caused by the control of returning the refrigeration oil from the accumulator 9 to the compressors 1A and 1B.

The control device 20 is, for example, a computer device such as a microcomputer. The control device 20 performs the oil equalization control so that the refrigeration oil returns by priority to a compressor having a smaller amount of the refrigeration oil in the order from that compressor. In the present embodiment, a sequence starting from a compressor having a smaller amount of the refrigeration oil and ending with a compressor having a larger amount is set in advance.

The control device 20 performs the oil equalization control so that, by performing rotational speed control of the compressor 1A and the like, following this sequence (control sequence), the refrigeration oil is given to the compressors as equally as possible. Note that the control device 20 performs other control of the refrigerant circuit system 100 in addition to the oil equalization control; however, description of functions relating to the other control is omitted in this specification.

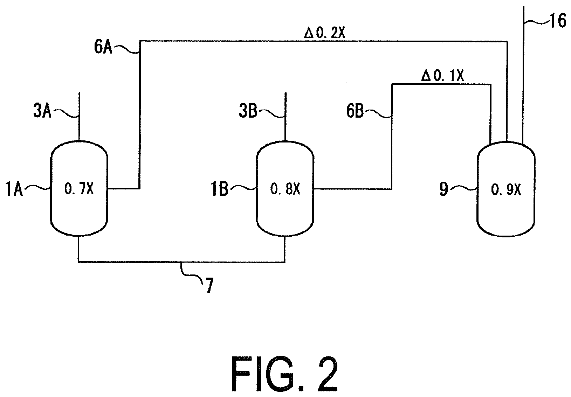

In the present embodiment, the control sequence is set in accordance with the pressure losses of the intake pipes 6A and 6B being flow paths of the refrigeration oil from the accumulator 9 to the compressors 1A and 1B. Next, a relationship between the pressure losses of the intake pipes 6A and 6B and the control sequence will be described with reference to FIG. 2.

FIG. 2 is a first explanatory diagram illustrating a control sequence for the compressors according to the embodiment of the present invention.

FIG. 2 illustrates pressures of the compressors 1A and 1B, the intake pipes 6A and 6B, and the accumulator 9. Assume that, for example, the intake pipe 6B is shorter than the intake pipe 6A or, for example, the intake pipe 6B has a pipe diameter larger than that of the intake pipe 6A.

As illustrated in the drawing, the accumulator 9 has a pressure of "0.9X" MPa, and in a case where the intake pipe 6A has a pressure loss of "0.2X" MPa, the compressor 1A has a pressure of "0.7X" MPa. In a case where the intake pipe 6A has a pressure loss of "0.1X" MPa, the compressor 1A has a pressure of "0.8X" MPa. The pressure "0.8X" of the compressor 1A is greater than the pressure "0.7X" of the compressor 1B, so that the refrigeration oil passes through the oil equalization pipe 7 and moves to the compressor 1B having a lower pressure, and that the compressor 1A thus stores a smaller amount of the refrigeration oil than that in the compressor 1B.

In this case, the control device 20 performs such oil equalization control that the refrigeration oil moves from the compressor 1B to the compressor 1A first and then moves from the compressor 1A to the compressor 1B. As an intake pipe connecting an accumulator with a compressor has a smaller pressure loss, a smaller amount of refrigeration oil flows into the compressor connected with the intake pipe. Thus, the control device 20 performs such control as to return the refrigeration oil to a compressor connected with an intake pipe having a smaller pressure loss in the order from that compressor (in the case of this example, in the order of the compressor 1B and then the compressor 1A). The control of returning the refrigeration oil is to increase the rotational speed of the compressor 1B in a case where, for example, the refrigeration oil is to return to the compressor 1B. When the control device 20 increases the rotational speed of the compressor 1B, the pressure of the compressor 1B decreases. A decrease in the pressure of the compressor 1B can promote movement of the refrigeration oil from the compressor 1A to the compressor 1B. The oil equalization control of the present embodiment is performed by setting a control sequence by listing the intake pipe 6A and the like in ascending order of the pressure losses, and by varying the rotational speeds of the compressor 1A and the like, following this control sequence. In specific, the control device 20 increases the rotational speed of the compressor in its turn in a predetermined period in the control sequence so that the compressor in its turn has a relatively low pressure.

Note that the control device 20 includes a storage unit (not illustrated) in which information on the control sequence based on the pressure losses of the intake pipe 6A and the like is preliminarily stored, and the control device 20 performs the oil equalization control on the basis of this information.

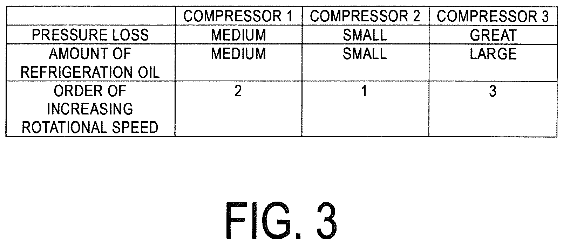

FIG. 3 is a second explanatory diagram illustrating a control sequence for the compressors according to the embodiment of the present invention.

FIG. 3 illustrates relationships among the pressure losses of the intake pipes connected with the compressors, the amounts of the refrigeration oil, and a control sequence for the rotational speeds of the compressors. The refrigerant circuit system 100 exemplified in FIG. 1 has two compressors; however, to more clearly describe the features of the oil equalization control of the present embodiment, the table in FIG. 3 exemplifies the above-described relationships in a case of a system including three compressors 1 to 3 connected in parallel. The compressors 1 to 3 are connected with each other by using the oil equalization pipe.

In the case of the example illustrated in FIG. 3, the intake pipe connected with the compressor 1 has a medium pressure loss among the three compressors. Similarly, the intake pipe connected with the compressor 2 has the smallest pressure loss among the three, and the intake pipe connected with the compressor 3 has the greatest pressure loss.

As described with reference to FIG. 2, it is conceivable that, as an intake pipe has a greater pressure loss, the compressor connected with the intake pipe stores a larger amount of the refrigeration oil. Thus, for example, the pressure loss "GREAT" of the compressor 3 indicates that the compressor 3 has the largest amount of the refrigeration oil among the three.

The above description indicates that, in the case of the compressors 1 to 3 exemplified in FIG. 3, the compressor 2 stores the smallest amount of the refrigeration oil, the compressor 1 stores the second smallest amount of the refrigeration oil, and the compressor 3 stores the largest amount of the refrigeration oil. In this refrigerant circuit system, it is set in advance to increase the rotational speeds in the order of the compressor 2, the compressor 1, and then the compressor 3 in the oil equalization control. The information on this control sequence is stored in, for example, the storage unit of the control device. On the basis of the information on the control sequence, the control device first increases the rotational speed of the compressor 2 in the predetermined period. This operation decreases the pressure of the compressor 2 and moves the refrigeration oil from the other compressors 1 and 3 having higher pressures via the oil equalization pipe to the compressor 2.

After the elapse of the predetermined period, the control device returns the rotational speed of the compressor 2 to the original speed and then increases the rotational speed of the compressor 1 in the predetermined period. After another elapse of the predetermined period, the control device returns the rotational speed of the compressor 1 to the original speed and lastly increases the rotational speed of the compressor 3 in the predetermined period.

In this way, in the present embodiment, such oil equalization control is performed that the rotational speeds are increased in the predetermined period in the order from a compressor connected with an intake pipe having a smaller pressure loss (in the order from a compressor having a smaller amount of the refrigeration oil). This can correct an imbalance in the refrigeration oil among the plural compressors 1 to 3, prevent the compressors 1 to 3 from stopping because of a deficiency of the refrigeration oil or the like, and improve reliability of the system.

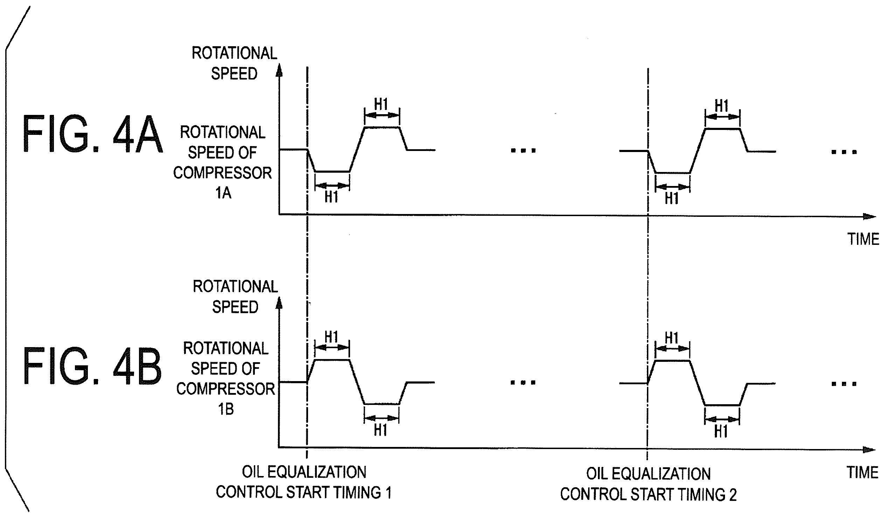

Next, the oil equalization control of the refrigerant circuit system 100 exemplified in FIG. 1 will be described with reference to FIGS. 4A and 4B. The magnitude relationship between the pressure losses of the intake pipes 6A and 6B is as illustrated in FIG. 2.

That is, the oil equalization control is performed in the control sequence of the compressor 1B and then the compressor 1A.

FIGS. 4A and 4B are explanatory diagrams illustrating rotational speed control of the compressors according to the embodiment of the present invention.

FIGS. 4A and 4B illustrate an example of the oil equalization control according to the present embodiment that is performed at two different points in time in operation of the refrigerant circuit system 100.

FIG. 4A illustrates transition of the rotational speed of the compressor 1A at start timings 1 and 2. FIG. 4B illustrates transition of the rotational speed of the compressor 1B at the start timings 1 and 2.

At the start timing 1, the control device 20 increases the rotational speeds in a predetermined period in the order of the compressor 1B and then the compressor 1A on the basis of the control sequence set in advance. In specific, first, the control device 20 operates the compressor 1B while increasing the rotational speed of the compressor 1B to a predetermined rotational speed in a predetermined period H1. On the other hand, the compressor 1A may be operated with its rotational speed remaining unchanged or being decreased to a predetermined rotational speed in the predetermined period HI as illustrated in FIG. 4A. Decreasing the rotational speed of the compressor 1A can increase a pressure differential between the compressors 1A and 1B. This can, for example, reduce the degree of an increase in the rotational speed of the compressor 1B and prevent a stop of operation of the compressor 1B or the like due to actuation of protective control. After the elapse of the predetermined period H1, the compressors 1A and 1B are switched, which means that the control device 20 operates the compressor 1A while increasing the rotational speed of the compressor 1A to a predetermined value in the predetermined period HI and operates the compressor 1B while decreasing the rotational speed of the compressor 1B to a predetermined value in the predetermined period HI.

After all the compressors 1A and 1B are operated once with their rotational speeds increased, the control device 20 returns the rotational speeds of the compressors 1A and 1B to the original speed and ends the oil equalization control. Thereafter, the control device 20 normally operates the compressors 1A and 1B at a rotational speed in accordance with a load for a while.

After the normal operation continues in a predetermined period, the control device 20 performs the oil return control. Then, after the elapse of a predetermined period, the control device 20 performs the control of returning the refrigeration oil from the accumulator 9 to the compressors 1A and 1B and at the same time starts the oil equalization control (start timing 2). Similar to the start timing 1, also at the start timing 2, the control device 20 increases the rotational speeds in the order of the compressor 1B and then the compressor 1A on the basis of the control sequence set in advance. The specific control process is similar to that at the start timing 1. After performing the control of increasing the rotational speed in the predetermined period H1 once for each of the compressors 1A and 1B, the control device 20 returns the rotational speeds of the compressors 1A and 1B to the original speed and ends the second oil equalization control.

Known oil equalization control often increases the rotational speeds, following a sequence set without considering the amounts of refrigeration oil in the compressors. In this case, for example, such control may be performed first that refrigeration oil is given to a compressor having a relatively large amount of refrigeration oil, which conversely causes a greater imbalance. In a case where, for example, a protective function is actuated in this state to prematurely end the oil equalization control, the execution of the oil equalization control may cause an even greater imbalance in the refrigeration oil. In contrast, in the present embodiment, in accordance with the magnitude relationship between the amounts of the refrigeration oil in the compressors based on the pressure losses of the intake pipes, such control is performed that the rotational speeds are increased in the order from a compressor having the smallest amount of the refrigeration oil so that the refrigeration oil returns to the compressor. The control is intended to balance the refrigeration oil, so that the imbalance does not increase in the oil equalization control and that, even if actuation of a protective function or the like prevents the oil equalization control from being completed, the imbalance in the refrigeration oil does not become greater than a state before the start of the oil equalization control.

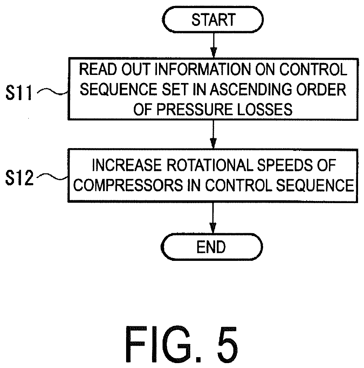

FIG. 5 is a flowchart illustrating an example of the oil equalization control according to the embodiment of the present invention.

A flow of oil equalization processing will be described with reference to FIG. 5, exemplifying the refrigerant circuit system 100 in FIG. 1. Assume that, for example, oil return operation has been performed, a predetermined period has elapsed, and a start timing of the oil equalization control has arrived.

First, the control device 20 reads out information on a control sequence set in ascending order of the pressure losses from the storage unit (not illustrated) (step S11). It is determined in the information on the control sequence that the rotational speeds of the compressors are increased in the order of the compressor 1B and then the compressor 1A.

Next, the control device 20 increases the rotational speeds of the compressors in the control sequence (step S12). In the case of the above-described example, the control device 20 increases the rotational speed of the compressor 1B in a predetermined period and then returns the rotational speed to the original rotational speed. At this time, the control device 20 may perform such control as to increase the rotational speed of the compressor 1B and at the same time decrease the rotational speed of the compressor 1A in the predetermined period, and then to return the rotational speeds to the original speed. The storage unit (not illustrated) of the control device 20 stores information on the increased rotational speed and the decreased rotational speed, and the control device 20 controls the rotational speeds of the compressors 1A and 1B on the basis of this information.

After returning the rotational speed of the compressor 1B to the original rotational speed, the control device 20 then performs such control as to increase the rotational speed of the compressor 1A in the predetermined period and then to return the rotational speed to the original speed. At this time, the control device 20 may perform such control as to increase the rotational speed of the compressor 1A and at the same time decrease the rotational speed of the compressor 1B in the predetermined period, and then to return the rotational speeds to the original speed. This ends one cycle of the oil equalization control. Note that, in one cycle of the oil equalization control, the control of increasing the rotational speeds of all the compressors once in the control sequence determined by the control device 20 may be repeated a plurality of times.

At a subsequent start timing of the oil equalization control, the control device 20 also performs the control of the rotational speeds of the compressors 1A and 1B in the same procedure. That is, the control of increasing the rotational speed is performed in the order of the compressor 1B and then the compressor 1A. By performing the control in accordance with the actual amounts of the refrigeration oil stored in the compressors 1A and 1B at the start of the oil equalization control in this way, the possibility of the oil equalization control causing an even greater imbalance in the amount of the refrigeration oil can be reduced. Such control as to increase the rotational speeds of all the compressors 1A and 1B once in the control sequence set in accordance with the pressure losses of the intake pipes 6A and 6B allows the refrigeration oil to be more equally provided to all the compressors 1A and 1B.

Note that the period in which the compressor 1A is operated at an increased rotational speed and the period in which the compressor 1B is operated at an increased rotational speed may not have the same length. For example, in a case where the oil equalization control starts in a state in which the compressor 1A stores a larger amount of the refrigeration oil, the period of increasing the rotational speed of the compressor 1B may be set relatively long so that the refrigeration oil is surely moved from the compressor 1A to the compressor 1B.

Next, another configuration example of the refrigerant circuit including a plurality of compressors will be described.

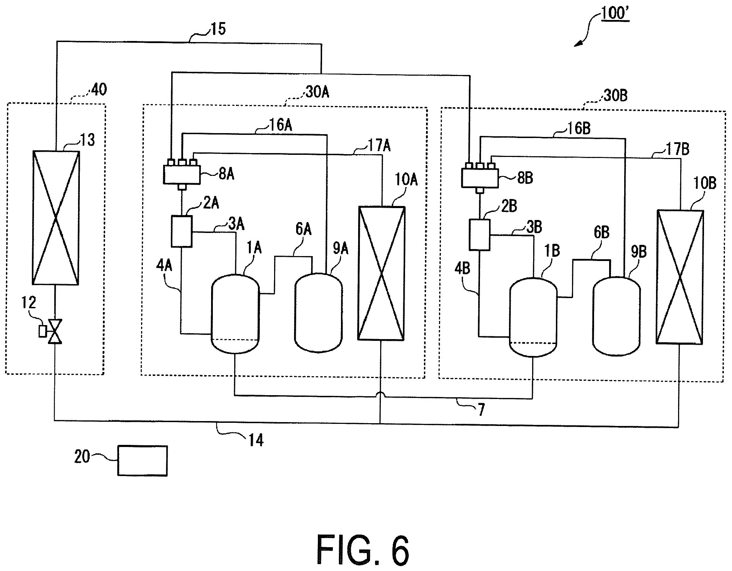

FIG. 6 is a second schematic diagram illustrating an example of the refrigerant circuit system according to the embodiment of the present invention.

A refrigerant circuit system 100' includes two outdoor units 30A and 30B. The outdoor unit 30A includes a compressor 1A, an oil separator 2A, an emission pipe 3A, an oil return pipe 4A, an intake pipe 6A, a four-way valve 8A, an accumulator 9A, an outdoor heat exchanger 10A, and the like. The outdoor unit 30B includes a compressor 1B, an oil separator 2B, an emission pipe 3B, an oil return pipe 4B, an intake pipe 6B, a four-way valve 8B, an accumulator 9B, an outdoor heat exchanger 10B, and the like. The compressors 1A and 1B respectively included in the outdoor unit 30A and the outdoor unit 30B are connected with each other by using an oil equalization pipe 7. The outdoor units 30A and 30B, an expansion valve 12, and an indoor heat exchanger 13 are connected with each other by using a liquid pipe 14 and a gas pipe 15. Note that FIG. 6 schematically illustrates a basic configuration of the refrigerant circuit system 100', and another constituent element may further be included. For example, two or more indoor units 40 including the expansion valve 12 and the indoor heat exchanger 13 may be provided.

Also in the refrigerant circuit system 100', the compressors 1A and 1B are connected in parallel with each other and operate at the same rotational speed in normal operation. The control device 20 executes oil return operation at intervals of predetermined periods, and then, after the elapse of the predetermined period, executes the oil equalization control. In this way, the oil equalization control of the present embodiment can also be applied to the refrigerant circuit system 100' including the plural outdoor units 30A and 30B.

The intake pipe 6A and the intake pipe 6B are provided, having mutually different pressure losses, at the time of installation on site. For example, the intake pipe 6A or the like of which the pressure loss is designed to be greater has a longer length or a smaller pipe diameter. The control device 20 stores information on a control sequence for the compressors 1B and 1A determined in ascending order of the pressure losses of the intake pipes 6A and 6B.

For example, the control device 20 reads out information on a control sequence set in ascending order of the pressure losses from the storage unit (not illustrated) (step S11). Next, the control device 20 increases the rotational speeds of the compressors in the control sequence (step S12). For example, when the pressure loss of the intake pipe 6A is greater than the pressure loss of the intake pipe 6B, the control device 20 increases the rotational speed of the compressor 1B of the outdoor unit 30B in the predetermined period first and then returns the rotational speed of the compressor 1B to the original speed. Next, the control device 20 performs such control as to increase the rotational speed of the compressor 1A of the outdoor unit 30A in the predetermined period and, after the elapse of the predetermined period, to return the rotational speed of the compressor 1A to the original speed. This corrects an imbalance in the amount of the refrigeration oil between the compressor 1A of the outdoor unit 30A and the compressor 1B of the outdoor unit 30B.

In addition, the constituent elements in the embodiments as described above can be replaced as appropriate with commonly known constituent elements, to the extent that it does not depart from the intention of the present invention. Also, the technical scope of the present invention is not limited to the above-mentioned embodiments, and various modifications may further be made without departing from the spirit of the present invention. For example, the number of the compressors connected in parallel in the configuration in FIG. 1 may be three or more. For example, the number of the outdoor unit 30A and the like in the configuration in FIG. 6 may be three or more. In the control of the rotational speeds of the compressors in the oil equalization control, control of decreasing the rotational speeds of the compressors in descending order of the amounts of the refrigeration oil in the compressors may be performed. The configuration in FIG. 1 or FIG. 6 may not include the accumulator 9 and the like. Even in this case, the control sequence of the present embodiment is set on the basis of the pressure losses of the pipes on the intake sides of the compressors 1A and 1B.

### Industrial Applicability

The above-described refrigerant circuit system and oil equalization control method can correct an imbalance in the refrigeration oil between the plural compressors and improve reliability of the system.

### Reference Signs List

100, 100' Refrigerant circuit system
1A, 1B Compressor
2A, 2B Oil separator
3A, 3B Emission pipe
4A, 4B Oil return pipe
5A, 5B Solenoid valve
6A, 6B Intake pipe
7 Oil equalization pipe
8, 8A, 8B Four-way valve
9, 9A, 9B Accumulator
10, 10A, 10B Outdoor heat exchanger
11, 11A, 11B Receiver
12, 12A, 12B Expansion valve
13 Indoor heat exchanger
14 Liquid pipe
15, 16, 16A, 16B, 17, 17A, 17B Gas pipe
20 Control device

## Claims

1. A refrigerant circuit system comprising:
a refrigerant circuit including a plurality of compressors, a heat exchanger, a four-way valve, an expansion valve, and a plurality of pipes connecting the compressors, the heat exchanger, the four-way valve, and the expansion valve, a refrigerant circulating through the refrigerant circuit; and
a control device configured to control the refrigerant circuit,
the plurality of compressors being connected in parallel,
each of the plurality of pipes being connected to an intake side of one of the plurality of compressors, and the plurality of pipes having mutually different pressure losses, and
the control device controlling a rotational speed of the compressor, in its turn, connected with the pipe in a sequence set in advance in accordance with the pressure losses of the pipes, in oil equalization control.

2. The refrigerant circuit system according to claim 1, wherein the control device performs such control that the compressor connected with the pipe having a smaller pressure loss has a relatively low pressure in order from the compressor among the plurality of compressors in the oil equalization control.

3. The refrigerant circuit system according to claim 1 or 2, wherein the control device increases the rotational speed of the compressor connected with the pipe having a smaller pressure loss in order from the compressor among the plurality of compressors in the oil equalization control.

4. The refrigerant circuit system according to any one of claims 1 to 3, wherein the plurality of pipes are pipes each connecting an accumulator with one of the plurality of compressors, the accumulator being disposed on the intake sides of the compressors in the refrigerant circuit system.

5. The refrigerant circuit system according to any one of claims 1 to 4, wherein
the pipes connected to the intake sides of the plurality of compressors have mutually different lengths, and
the control device increases the rotational speed of the compressor connected with the pipe having a shorter length in order from the compressor in the oil equalization control.

6. The refrigerant circuit system according to any one of claims 1 to 5, wherein
the pipes connected to the intake sides of the plurality of compressors have mutually different pipe diameters, and
the control device increases the rotational speed of the compressor connected with the pipe having a larger pipe diameter in order from the compressor in the oil equalization control.

7. An oil equalization control method comprising:
in a refrigerant circuit including a plurality of compressors, a heat exchanger, a four-way valve, an expansion valve, and a plurality of pipes connecting the compressors, the heat exchanger, the four-way valve, and the expansion valve, a refrigerant circulating through the refrigerant circuit, the plurality of compressors being connected in parallel, each of the plurality of pipes being connected to an intake side of one of the plurality of compressors, and the plurality of pipes having mutually different pressure losses,
controlling a rotational speed of the compressor, in its turn, connected with the pipe in a sequence set in advance in accordance with the pressure losses of the pipes.
